# EUROPEAN PATENT SPECIFICATION

(11) **EP 0 343 875 B1**
(45) Date of publication and mention of the grant of the patent: **22.11.1995**
(21) Application number: 89305104.5
(22) Date of filing: 19.05.1989
(51) Int. Cl.: H04M 1/05

(54) **A telephone handset convertible into a headphone**
In Kopfhörer umwandelbarer Telefonhandapparat
Combiné téléphonique convertible en casque

(30) Priority: 24.05.1988 US 198695
(43) Date of publication of application: 29.11.1989
(73) Proprietor: Chen, Ping-Huang, Taipei (TW)
(72) Inventor: Chen, Ping-Huang, Taipei (TW)
(74) Representative: Arthur, Bryan Edward

(56) References cited:
- EP-A- 0 262 915
- FR-A- 2 533 783
- US-A- 2 503 846
- US-A- 4 484 029

## Description

The telephone is an indispensable communicational tool nowadays. Most of the conventional telephone sets have been designed in a hand-held form without substantial changes.

When using a hand-held telephone, a user must keep his or her hand occupied, holding the telephone hand set. When making phone calls frequently or for quite a long period, it will appear that keeping one occupied, grasping the hand set, becomes tiresome and wasteful of time.

US2,503,846 discloses a telephone handset having a fixed mouthpiece and fixed earpiece. The handset also includes a flexible arm which is extendible from within the handset. A second earpiece is mounted at the end of the arm, and the arm is curved in order to fit over the top of the user's head.

Accordingly, to reduce the above-mentioned short-comings, the present invention provides a telephone handset convertible into a headphone comprising a circuitry portion disposed inside the handset, an upper receiver unit including a stationary handset receiver and a movable receiver slidably extendable from the stationary receiver, a lower transmitter unit including a transmitter and a transmitter seat, an intermediate push-button board disposed between the upper receiver unit and the lower transmitter unit, a first and a second telescopic arc-shaped strip extendable from the handset for supporting the movable receiver between an extended headphone position and a retracted position, characterised in that an upper surface of the first strip includes a central longitudinal recess for retaining the second strip therein when the handset is in the retracted position and for permitting the second strip to be longitudinally slidable along the recess, in that each strip has a central longitudinal slide slot for electrically connecting the movable receiver to the handset when the movable receiver is extended from the handset, in that the stationary receiver includes a recess, and the movable receiver includes a flange portion adapted to fit in the recess, in that the telescopic strips are retractable into a recess in the handset behind the push-button board without being deformed, in that the handset includes a clamp for supporting at least a part of the first strip within the recess in the handset, in that each telescopic strip is made of a semi-rigid material, in that the transmitter is slidably extendable from the transmitter seat on an extendable slide member having an internal slide slot for engagement with a guide member disposed on the transmitter seat, in that the guide member guides the slide member through the slide slot so as to permit longitudinal adjustment and pivotal adjustment of the transmitter, and in that an extendable wire electrically connects the circuitry portion to the transmitter.

Preferably the extendable slide member is slidable between an extended position and a substantially retracted position. The first and second strips may be slidably connected by a join button. One strip is normally attached to the movable receiver. One strip may be slidably connected to the handset. Preferably the recess in the first strip includes two sidewalls made of a conductive material, the second strip includes two side portions made of conductive material and the sidewalls and side portions are held in electrical contact. Preferably, the movable receiver is electrically connected to the circuitry via the first and second strips in which case, the first strip is electrically attached to the circuitry via an electrode clamp. The first and second strips are preferably made from a flexible material, and the central longitudinal recess of the first strip may be formed with a trapezoid cross-section, including two inclined conductive side walls, the second strip having two side portions which are oppositely inclined to the two inclined sidewalls and are made of a conductive material wherein the two side portions maintain contact with the two conductive sidewalls of said recess when the second strip is slidably received therein;
an electrode set for slidably clamping the first strip and making an electrical connection between the circuitry of said hand set and said two inclined conductive sidewalls abutting against a pair of conductive plates of said electrode set (114) respectively;
wherein other portions of said electrode set, said first strip and said second strip are made of an insulating material. When extended from the handset to form a headphone, said movable receiver may remain electrically connected with the circuitry of said hand set by said conductive plates of said electrode set by said conductive sidewalls of said first strip and by said conductive side portions of said second strip such that said movable receiver and said handset receiver both receive a sound signal. Preferably two upper portions of said two conductive sidewalls of said first strip are made of an insulating material such that when the movable receiver is associated with said handset receiver, said first and second strips are cut off from the circuitry by said upper surface portions to produce sound only in said handset receiver.

Accordingly, since the telephone handset can be converted into a headphone producing double-form or stereo-like sound, the user can wear the headphone-type telephone keeping his or her hands free to do normal work at his or her own convenience. Furthermore, double-form sound in the receiver will be clearer to hear than single-form sound, thus the user can receive more reliable messages.
- FIG. 1: is an exploded view of the telephone handset of the present invention;
- FIG. 2: shows a three-dimensional perspective view of the assembled telephone handset of the present invention,
- FIG. 3: shows a three-dimensional perspective view of the headphone-like telephone handset of the present invention with the movable receiver drawn outward from the handset according to Fig. 2;
- FIG. 4: is a lateral view of the present invention according to Fig. 3;
- FIG. 5: is an enlarged plan view of the transmitter of the present handset illustrating the adjustment thereof;
- FIG. 6: shows a view of the first and second slide strips of the present handset assembled together with the first strip clamped by two electrodes of a electrode set;
- FIG.6A: is an enlarged plan view of the first and second slide strips joined with each other by a join button;
- FIG.6B: is a fragmentary view illustrating the contact and assembly of the electrode the first slide strip and the-second slide strip for constructing a circuit communicating the movable receiver with the circuitry portion disposed inside the handset of the present invention;
- FIG.6C: is a cross-sectional view taken on line 6-6 in Fig. 6B;
- FIG.6D: is fragmentary view of the electrode and the totally retracted first and second slide strip according to Fig. 6B, illustrating the cut-off condition effected by way of the insulating upper surface of the first slide strip;
- FIG. 7: is an embodiment of the inner circuit according to the present invention;
- FIG. 8: is a perspective view of the hand set according to the present invention when resting in the body of the telephone.

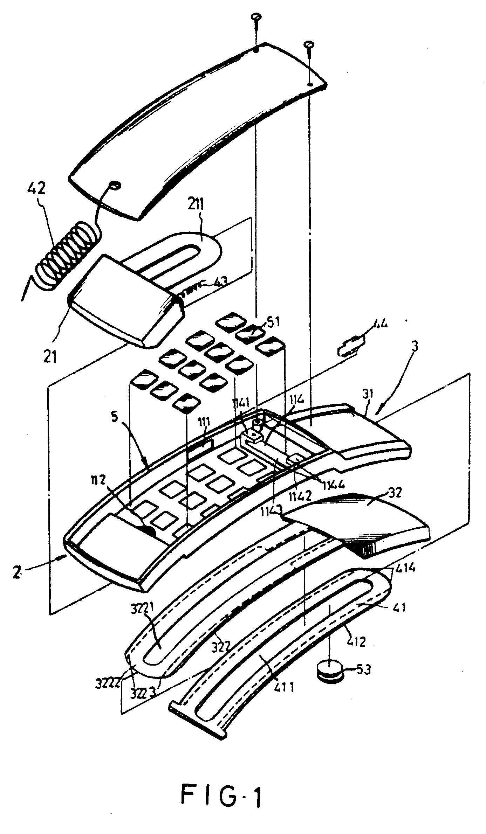

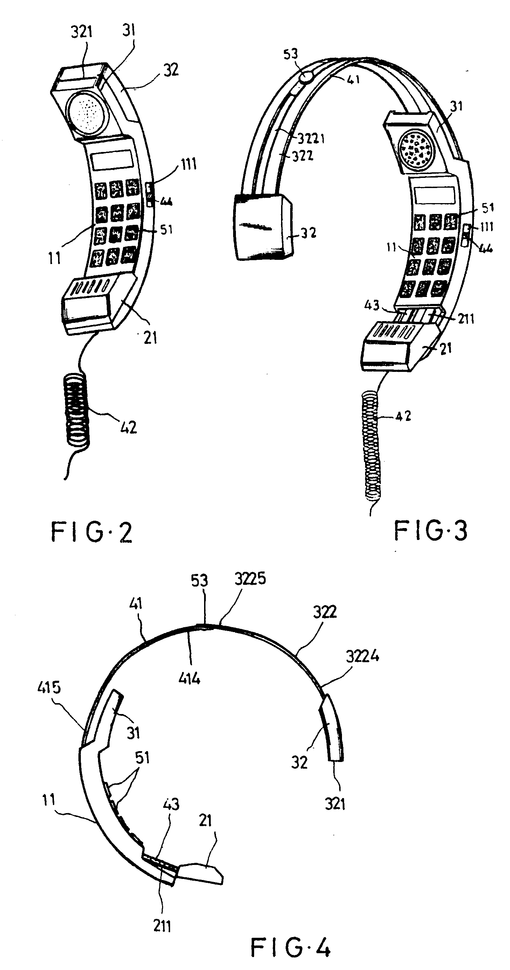

Referring first from Fig. 1 to Fig. 3, the telephone hand set 11 of the present invention is shaped in an arcuate form with its receiver unit 3 disposed at the upper end, and the transmitter unit 2 at the lower end and a button board portion 5 provided therebetween as in a conventional telephone. A slide switch 44 is set within a side slot 111 to effect the switch-on or off of the power resource instead of using a conventional hang-up type switch. Referring particularly from Fig. 3 to Fig. 5, a transmitter 21 of said transmitter unit 2 is provided with an upper slide member 211 having an internal slide slot 2111 through which the slide member 211 can be slidably pivotably moved by a guide member 112 provided on a transmitter seat 22 of said transmitter unit 2. With the above arrangement, the transmitter 21 can be adjustably extended outward from said transmitter seat 22 and selectively pivoted to get closer to the user's mouth.

The transmitter 21 is electrically connected with the circuitry portion disposed inside the handset 11 by an extendible wire 43, thus permitting the transmitter 21 itself to remain connected with said circuitry portion when extended outward or pivoted.

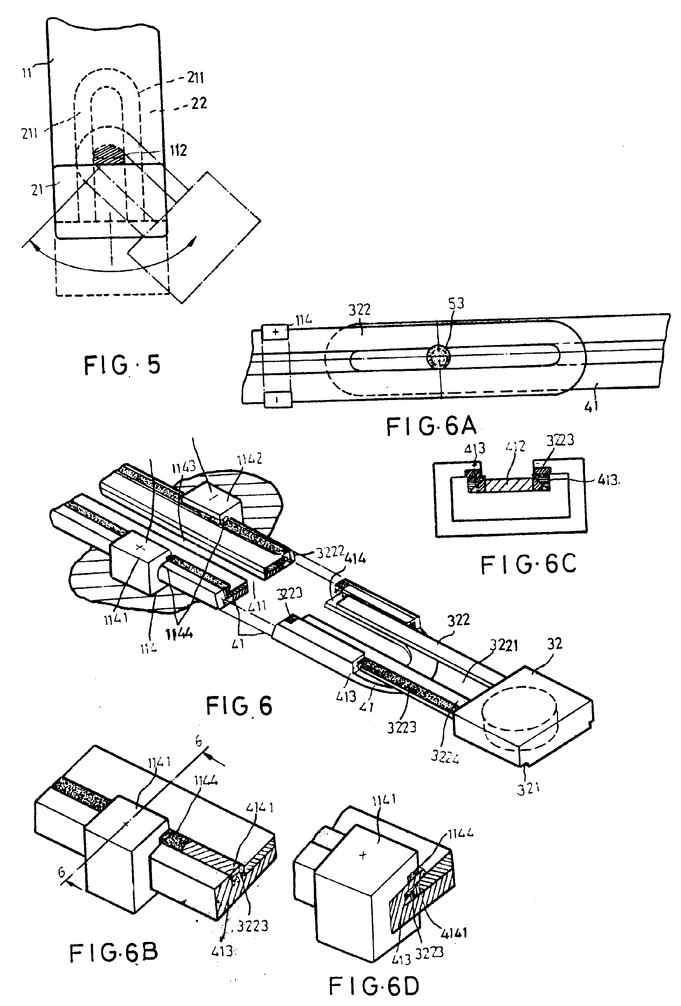

Referring now from Fig. 2 to Fig. 4, especially to Fig. 6, the receiver unit 3 of the present hand set 11 consists of a stationary receiver 31 and a movable receiver 32, wherein the movable receiver 32 can be separably associated with the stationary receiver 31 with a flange portion 321 of receiver 32 fitly inserted into a recess portion 311 of the stationary receiver 31.

A first and a second telescopic arc-shaped strips 41 and 322 having alike central longitudinal slide slot 411 and 3221 respectively, are used to connect the movable receiver 32 to the hand set 11 when said movable receiver 32 is drawn outward from the stationary receiver 31 in such a manner that the second strip 322 is rigidly and electrically engaged with the movable receiver 32 at its front end 3224 and slidably joined with the front end 414 of the first strip 41 at its rear end 3225 by a join button 53 having two enlarged end portions and an intermediate portion having a diameter slightly smaller than the width of said slide slots 411 and 3221. The join button 53 is located in both the slide slots 41 and 322 at its intermediate portion with its two enlarged end portions clamping said two strips 41 and 322 together, thus permitting relative sliding movement thereof without detachment from each other, while the first strip 41 can be retractably drawn outward from the receiver unit 3 with its rear end 415 attached to said receiver unit 3 and its front end 414 slidably joined with the second strip 322 as precedingly described.

As shown in Fig. 1 and Fig. 6, a central longitudinal recess 412 with trapezoid cross-section is formed along the upper surface of the first strip 41 for receiving the second strip 322 having identical cross-section so to effect steady sliding movement thereof without swaying.

Further more, the first strip 41 is slidably clamped by an electrode set 114 disposed inside the hand set 11 having a positive electrode 1141 and a negative electrode 1142 that are electrically connected with said circuitry portion disposed inside the hand set 11, with its two inclined conductive sidewalls 413 of said recess 412 abutting against a pair of conductive plates 1144 of the electrodes 1141 and 1142 of said electrode set 114 respectively, while constantly keeping in contact with two reversely inclined conductive side portions 3223 of the second strip 322 received therein. Except for the above-mentioned conductive elements, all the other portions of the electrode set 114, strip 41 and strip 322 are made of insulating material.

Accordingly, as shown in Fig. 6, when drawn outward from the hand set 11 to convert the present invention into a headphone-like form, the movable receiver 32 it still electrically connected to the circuitry portion of the hand set 11 by conductive plates 1144, conductive sidewalls 413 of the first strip 41 and the conductive side portions 3223 of the second strip 322 so that both of the stationary receiver 31 and movable receiver 32 can receive eletrical signals and transform them into sound waves so producing double-form or stereo-like sounds.

Particularly referring to Fig. 6, two upper surface portions 4141 of said two conductive sidewalls 413 at the front end 414 of the first strip 41 are specifically made of insulating material in correspondence with said conductive plates 1144 of electrodes 1141 and 1142 respectively. Thus when assembled with the stationary receiver 31 with the first and second strips 41 and 322 retracted together inside the receiver unit 3, the movable receiver 32 is cut off from the circuitry portion by the insulating upper surface portions 4141 to change the double-form or stereo-like sound into single-form sound.

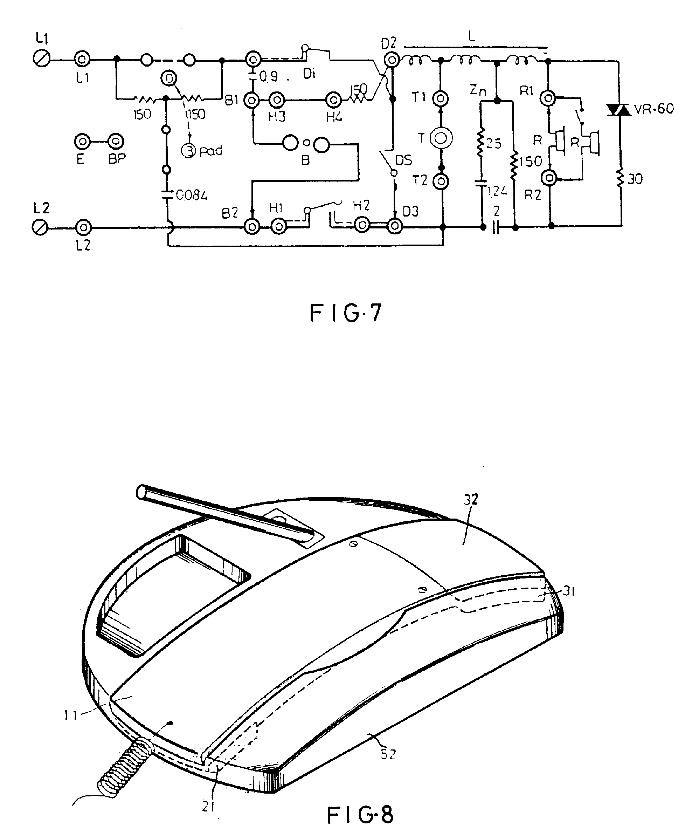

With the above arrangement, since the movable receiver 32 can be freely extended outward or retracted backward to convert the hand set 11 into a headphone or vice versa, and said transmitter 21 can be adjustably extended outward or pivoted to be adjacent to a user's mouth, the hand set 11 of the present invention can be selectively used in two different modes for the user's convenience. Fig. 7 illustrates one embodiment of the circuitry portion of the hand set. Fig. 8 illustrates the hand set 11 when resting in the cradle 52 of the telephone, including the telephone cord 51.

## Claims

1. A telephone handset convertible into a headphone comprising
a circuitry portion disposed inside the handset,
an upper receiver unit (3) including a stationary handset receiver (31) and a movable receiver (32) slidably extendable from the stationary receiver (31)
a lower transmitter unit (2) including a transmitter (21) and a transmitter seat,
an intermediate push-button board (5) disposed between the upper receiver unit (3) and the lower transmitter unit (2),
a first and a second telescopic arc-shaped strip (41,322) extendable from the handset (11) for supporting the movable receiver (32) between an extended headphone position and a retracted position,
characterised in that an upper surface of the first strip includes a central longitudinal recess (412) for retaining the second strip therein when the handset is in a retracted position and for permitting the second strip (322) to be longitudinally slidable along the recess, in that each strip has a central longitudinal slide slot (411, 3221) for electrically connecting the movable receiver (32) to the handset (11) when the movable receiver (32) is extended from the handset (11), in that the stationary receiver includes a recess, and the movable receiver includes a flange portion adapted to fit in the recess, in that the telescopic strips (41, 322) are retractable into a recess in the handset behind the push-button board without being deformed, in that the handset includes a clamp for supporting at least a part of the first strip (41) within the recess in the handset, in that each telescopic strip (41, 322) is made of a semi-rigid material, in that the transmitter (21) is slidably extendable from the transmitter seat on an extendable slide member (211) having an internal slide slot for engagement with a guide member (112) disposed on the transmitter seat, in that the guide member (112) guides the slide member (211) through the slide slot so as to permit longitudinal adjustment and pivotal adjustment of the transmitter (21), and in that an extendable wire (43) electrically connects the circuitry portion to the transmitter (21).

2. A telephone handset (11) according to claim 1 characterized in that the extendable slide member (211) is slidable between an extended position and a substantially retracted position.

3. A telephone handset (11) according to any preceding claim characterized in that the first and second strips (41,322) are slidably connected by a join button (53).

4. A telephone handset (11) according to any preceding claim characterised in that one strip is attached to the movable receiver (32).

5. A telephone handset (11) according to any preceding claim characterised in that one strip is slidably connected to the handset (11).

6. A telephone handset (11) according to any preceding claim characterized in that the recess (412) in the first strip (41) includes two sidewalls made of conductive material, in that the second strip (322) includes two side portions made of conductive material and in that the sidewalls and side portions are held in electrical contact.

7. A telephone handset (11) according to any preceding claim characterized in that the movable receiver (32) is electrically connected to the circuitry via the first and second strips (41,322).

8. A telephone handset (11) according to claim 7 characterized in that the first strip (41) is electrically attached to the circuitry via an electrode clamp.

9. A telephone handset (11) according to any preceding claim characterized by the first and second strips (41,322) formed of a flexible material.

10. A telephone handset (11) according to any preceding claim characterized in that the central longitudinal recess (412) of the first strip (41) is formed with a trapezoid cross-section, including two inclined conductive side walls (413), the second strip (322) having two side portions (3223) which are oppositely inclined to the two inclined sidewalls (413) and are made of a conductive material wherein the two side portions (3223) maintain contact with the two conductive sidewalls of said recess (412) when the second strip (322) is slidably received therein;
an electrode set (114) for slidably clamping the first strip (41) and making an electrical connection between the circuitry of said hand set (11) and said two inclined conductive sidewalls (413) abutting against a pair of conductive plates (1144) of said electrode set (114) respectively;
wherein other portions of said electrode set (114), said first strip (41) and said second strip (322) are made of an insulating material.

11. A telephone handset (11) as claimed in any preceding claim wherein when extended from said handset (11) to form a headphone, said movable receiver (32) remains electrically connected with the circuitry of said hand set (11) by said conductive plates (1144) of said electrode set (114), by said conductive sidewalls (413) of said first strip (40) and by said conductive side portions (3223) of said second strip (322) such that said movable receiver (32) and said handset receiver (31) both receive a sound signal.

12. A telephone hand set (11) as claimed in any preceding claim wherein two upper surface portions (4141) of said two conductive sidewalls (413) of said first strip (41) are made of an insulating material such that when the movable receiver (32) is associated with said handset receiver (31), said first and second strips (32) are cut off from the circuitry by said upper surface portions (4141) to produce sound only in said handset receiver (31).

## Patentansprüche

1. Telefonhörer, der in einen Kopfhörer umwandelbar ist, mit
einem im Inneren des Hörers angeordneten Schaltungsteil, einer oberen Empfängereinheit (3), umfassend einen stationären Hörerempfänger (31) und einen bewegbaren Empfänger (32), der verschiebbar aus dem stationären Empfänger (31) ausfahrbar ist,
einer unteren Übertragungseinheit (2), umfassend einen Sender (21) und einen Sendersitz,
einer zwischen der oberen Empfängereinheit (3) und der unteren Übertragungseinheit (2) angeordneten Tastatur,
einem ersten und einem zweiten teleskopischen bogenförmigen Streifen (41, 322), die aus dem Hörer (11) ausfahrbar sind, um den bewegbaren Empfänger (32) zwischen einer ausgefahrenen Kopfhörerposition und einer eingefahrenen Position zu halten,
**dadurch gekennzeichnet,** daß eine obere Oberfläche des ersten Streifens eine zentrale longitudinale Vertiefung (412) aufweist, um den zweiten Streifen hierin zu halten, wenn der Hörer in einer eingefahrenen Position ist, und um zu ermöglichen, daß der zweite Streifen (322) longitudinal entlang der Vertiefung verschiebbar ist, daß jeder Streifen einen zentralen longitudinalen Gleitschlitz (411, 3221) aufweist, um den bewegbaren Empfänger (32) elektrisch mit dem Hörer (11) zu verbinden, wenn der bewegbare Empfänger (32) aus dem Hörer (11) ausgefahren ist, daß der stationäre Empfänger eine Vertiefung aufweist und der bewegbare Empfänger einen Flanschabschnitt aufweist, der an die Vertiefung angepaßt ist, daß die teleskopischen Streifen (41, 322) in eine Vertiefung in dem Hörer hinter der Tastatur einfahrbar sind ohne deformiert zu werden, daß der Hörer eine Klemme zum Halten mindestens eines Teils des ersten Streifens (41) in der Vertiefung in dem Hörer umfaßt, daß jeder teleskopische Streifen (41, 322) aus einem halbsteifen Material gefertigt ist, daß der Sender (21) verschiebbar aus dem Sendersitz ausfahrbar ist auf einem ausfahrbaren Gleitelement (211), das einen inneren Gleitschlitz zum Eingriff mit einem auf dem Sendersitz angeordneten Führungselement (112) aufweist, daß das Führungselement (112) das Gleitelement (211) durch den Gleitschlitz führt, so daß eine longitudinale Anpassung und schwenkende Anpassung des Senders (21) ermöglicht wird, und daß eine verlängerbare Leitung (43) das Schaltungsteil mit dem Sender (21) elektrisch verbindet.

2. Telefonhörer (11) nach Anspruch 1, dadurch gekennzeichnet, daß das ausfahrbare Gleitelement (211) zwischen einer ausgefahrenen Position und einer im wesentlichen eingefahrenen Position verschiebbar ist.

3. Telefonhörer (11) nach einem der vorhergehenden Ansprüche, dadurch gekennzeichnet, daß der erste und zweite Streifen (41, 322) über einen Verbindungsknopf (53) verschiebbar verbunden sind.

4. Telefonhörer (11) nach einem der vorhergehenden Ansprüche, dadurch gekennzeichnet, daß ein Streifen an dem bewegbaren Empfänger (32) befestigt ist.

5. Telefonhörer (11) nach einem der vorhergehenden Ansprüche, dadurch gekennzeichnet, daß ein Streifen verschiebbar mit dem Hörer (11) verbunden ist.

6. Telefonhörer (11) nach einem der vorhergehenden Ansprüche, dadurch gekennzeichnet, daß die Vertiefung (412) in dem ersten Streifen (41) zwei Seitenwände aus leitendem Material umfaßt, daß der zweite Streifen (322) zwei Seitenabschnitte aus leitendem Material umfaßt und daß die Seitenwände und Seitenabschnitte in elektrischem Kontakt gehalten sind.

7. Telefonhörer (11) nach einem der vorhergehenden Ansprüche, dadurch gekennzeichnet, daß der bewegbare Empfänger (32) über den ersten und zweiten Streifen (41, 322) elektrisch mit der Schaltung verbunden ist.

8. Telefonhörer (11) nach Anspruch 7, dadurch gekennzeichnet, daß der erste Streifen (41) über eine Elektrodenklemme elektrisch mit der Schaltung verbunden ist.

9. Telefonhörer (11) nach einem der vorhergehenden Ansprüche, dadurch gekennzeichnet, daß der erste und der zweite Streifen (41, 322) aus flexiblem Material gebildet sind.

10. Telefonhörer (11) nach einem der vorhergehenden Ansprüche, dadurch gekennzeichnet, daß die zentrale longitudinale Vertiefung (412) des ersten Streifens (41) mit einem trapezförmigen Querschnitt, umfassend zwei geneigte leitende Seitenwände (413), ausgebildet ist, wobei der zweite Streifen (322) zwei Seitenabschnitte (3223) aufweist, die entgegengesetzt zu den beiden geneigten Seitenwänden (413) geneigt sind und aus leitendem Material gebildet sind, wobei die beiden Seitenabschnitte (3223) Kontakt zu den beiden leitenden Seitenwänden der Vertiefung (412) halten, wenn der zweite Streifen (322) gleitend darin aufgenommen wird; ein Elektrodensatz (114) zum verschiebbaren Klemmen des ersten Streifens (41) und Herstellen einer elektrischen Verbindung zwischen der Schaltung des Hörers (11) und den beiden geneigten leitenden Seitenwänden (413), indem sie gegen ein Paar leitender Platten (1144) des Elektrodensatzes (114) stoßen;
wobei andere Teile des Elektrodensatzes (114), des ersten Streifens (41) und des zweiten Streifens (322) aus einem isolierenden Material gefertigt sind.

11. Telefonhörer (11) nach einem der vorhergehenden Ansprüche, wobei der bewegbare Empfänger (32) über die leitenden Platten (1144) des Elektrodensatzes (114), über die leitenden Seitenwände (413) des ersten Streifens (40) und über die leitenden Seitenabschnitte (3223) des zweiten Streifens (322) so mit der Schaltung des Hörers (11) elektrisch verbunden bleibt, daß der bewegbare Empfänger (32) und der Hörerempfänger (31) beide ein Tonsignal empfangen, wenn der Hörer (11) zu einem Kopfhörer aufgefahren ist.

12. Telefonhörer (11) nach einem der vorhergehenden Ansprüche, wobei zwei obere Oberflächenabschnitte (4141) der beiden leitenden Seitenwände (413) des ersten Streifens (41) aus einem isolierenden Material gebildet sind, so daß der erste und zweite Streifen (32) durch den oberen Oberflächenabschnitt (4141) von der Schaltung abgeschnitten sind, um nur in dem Hörerempfänger (31) einen Ton zu erzeugen, wenn der bewegbare Empfänger (32) mit dem Hörerempfänger (31) asoziiert ist.

## Revendications

1. Poste téléphonique à combiné manuel convertible en un casque téléphonique comprenant :
une partie de circuit électrique disposé à l'intérieur du combiné manuel,
une unité réceptrice supérieure comprenant un récepteur (31) de combiné manuel fixe et un récepteur mobile (32) pouvant être éloigné à coulissement du récepteur fixe (31),
une unité émettrice (2) inférieure comprenant un émetteur (21) et un siège d'émetteur,
un tableau (5) à boutons-poussoirs intermédiaire disposé entre l'unité réceptrice supérieure (3) et l'unité émettrice inférieure (2),
une première et une seconde lames en forme d'arcs télescopiques (41, 322) s'étendant à partir du combiné manuel (11) supportant le récepteur mobile (32) entre une position éloignée de casque téléphonique et une position rétractée,
ledit poste téléphonique convertible étant caractérisé en ce qu'une surface supérieure de la première lame comporte une cavité (412) longitudinale centrale pour retenir la seconde lame à l'intérieur lorsque le combiné manuel est dans une position rétractée et pour permettre à la seconde lame (322) de coulisser longitudinalement le long de la cavité, en ce que chaque lame comporte une fente de coulissement longitudinale centrale (411, 3221) pour relier électriquement le récepteur mobile (32) au combiné manuel (11) lorsque le récepteur mobile (32) est éloigné du combiné manuel (11), en ce que le récepteur fixe comprend une cavité, et le récepteur mobile comprend une partie de flasque adaptée de manière à s'ajuster dans la cavité, en ce que les lames télescopiques (41, 322) peuvent se rétracter dans la cavité, dans le combiné manuel, derrière le tableau à boutons-poussoirs, ceci sans déformation, en ce que le combiné manuel comprend une pince pour supporter au moins une partie de la première lame (41) à l'intérieur de la cavité dans le combiné manuel, en ce que chaque lame télescopique (41, 322) est constituée en un matériau semi-rigide, en ce que l'émetteur (21) peut s'éloigner à coulissement du siège de l'émetteur sur un organe à coulisse extensible (211) présentant une fente de coulissement interne destinée à s'engager avec un organe de guidage (112) disposé sur le siège de l'émetteur, en ce que l'organe de guidage (112) guide l'organe à coulisse (211) à travers la fente de coulissement, de façon à permettre l'ajustement longitudinal et l'ajustement en pivotement de l'émetteur (21), et en ce qu'un fil conducteur extensible (43) relie électriquement la partie de circuit électrique à l'émetteur (21).

2. Poste téléphonique à combiné manuel (11) selon la revendication 1, caractérisé en ce que l'organe à coulisse extensible (211) coulisse entre une position éloignée et une position sensiblement rétractée.

3. Poste téléphonique à combiné manuel (11) selon l'une quelconque des revendications précédentes, caractérisé en ce que la première et la seconde lames (41, 322) sont reliées à coulissement par un bouton de jonction (53).

4. Poste téléphonique à combiné manuel (11) selon l'une quelconque des revendications précédentes, caractérisé en ce qu'une lame est fixée au récepteur mobile (32).

5. Poste téléphonique à combiné manuel (11) selon l'une quelconque des revendications précédentes, caractérisé en ce qu'une lame est reliée à coulissement au combiné manuel (11).

6. Poste téléphonique à combiné manuel (11) selon l'une quelconque des revendications précédentes, caractérisé en ce que la cavité (412) formée dans la première lame (41) comprend deux parois latérales fabriquées en un matériau conducteur, en ce que la seconde lame (322) comprend deux parties latérales fabriquées en matériau conducteur et en ce que les parois latérales et les parties latérales sont maintenues en contact électrique.

7. Poste téléphonique à combiné manuel (11) selon l'une quelconque des revendications précédentes, caractérisé en ce que le récepteur mobile (32) est relié électriquement au circuit électrique par l'intermédiaire de la première et de la seconde lames (41, 322).

8. Poste téléphonique à combiné manuel (11) selon la revendication 7, caractérisé en ce que la première lame (41) est fixée électriquement au circuit électrique par l'intermédiaire d'une pince électrode.

9. Poste téléphonique à combiné manuel (11) selon l'une quelconque des revendications précédentes, caractérisé en ce que la première et la seconde lames (41, 322) sont formées en un matériau souple.

10. Poste téléphonique à combiné manuel (11) selon l'une quelconque des revendications précédentes, caractérisé en ce que la cavité longitudinale centrale (412) de la première lame (41) est formée avec une section transversale trapézoïdale comprenant deux parois latérales conductrices inclinées (413), la seconde lame (322) comportant deux parties latérales (3223) qui sont inclinées en sens opposé par rapport aux deux parois latérales inclinées (413) et sont fabriquées en un matériau conducteur dans lequel les deux parties latérales (3223) maintiennent le contact avec les deux parois conductrices latérales de ladite cavité (412) lorsque la seconde lame (322) y est reçue en coulissement ;
un jeu d'électrodes (114) pour pincer en coulissement la première lame (41) et réaliser une connexion électrique entre le circuit électrique dudit combiné manuel (11) et lesdites deux parois latérales conductrices inclinées (413) butant contre une paire de plaques conductrices (1144) dudit jeu d'électrodes (114), respectivement,
dans lequel d'autres parties dudit jeu d'électrodes (114), de ladite première lame (41) et de ladite seconde lame (322) sont fabriquées en un matériau isolant.

11. Poste téléphonique à combiné manuel (11) selon l'une quelconque des revendications précédentes, dans lequel lorsqu'il est éloigné dudit combiné manuel (11) pour constituer un casque téléphonique, ledit récepteur mobile (32) reste électriquement relié au circuit électrique dudit combiné manuel (11) par lesdites plaques conductrices (1144) dudit jeu d'électrodes (114), par lesdites parois latérales conductrices (413) de ladite première lame (40) et par lesdites parties latérales conductrices (3223) de ladite seconde lame (322), de telle façon que ledit récepteur mobile (32) et ledit récepteur du combiné manuel (31) reçoivent tous deux un signal sonore.

12. Poste téléphonique à combiné manuel (11) selon l'une quelconque des revendications précédentes, dans lequel deux parties de surface supérieure (4141) desdites deux parois latérales conductrices (413) de ladite première lame (41) sont fabriquées en un matériau isolant de telle sorte que lorsque le récepteur mobile (32) est associé audit récepteur (31) du combiné manuel, lesdites première et seconde lames (32) sont déconnectées du circuit électrique par lesdites parties de surface supérieure (4141) de façon à ne produire des sons qu'au niveau dudit récepteur (31) du combiné manuel.
